Europäisches Patentamt

European Patent Office

Office européen des brevets

(19)

(11) Veröffentlichungsnummer: **0 277 115 B1**

(12) **EUROPÄISCHE PATENTSCHRIFT**

(45) Veröffentlichungstag der Patentschrift: **04.07.90**

(51) Int. Cl.⁵: **F 16 D 23/04**

(21) Anmeldenummer: **86904171.5**

(22) Anmeldetag: **17.07.86**

(86) Internationale Anmeldenummer:
**PCT/EP86/00422**

(87) Internationale Veröffentlichungsnummer:
**WO 87/00595 29.01.87 Gazette 87/03**

(54) **KLAUENSCHALTKUPPLUNG MIT SPERRSYNCHRONISIEREINRICHTUNG.**

(30) Priorität: **26.07.85 PCt/ep85/00376**

(43) Veröffentlichungstag der Anmeldung:
**10.08.88 Patentblatt 88/32**

(45) Bekanntmachung des Hinweises auf die
Patenterteilung:
**04.07.90 Patentblatt 90/27**

(84) Benannte Vertragsstaaten:
**DE GB SE**

(56) Entgegenhaltungen:
**WO-A-85/01998**
**DE-A-1 450 825**
**DE-A-1 906 863**
**DE-A-1 910 884**
**DE-B-1 284 309**
**DE-B-1 500 332**
**GB-A-1 125 946**
**GB-A-1 159 744**

(73) Patentinhaber: **ZAHNRADFABRIK
FRIEDRICHSHAFEN AKTIENGESELLSCHAFT
Löwentaler Strasse 100 Postfach 2520
D-7990 Friedrichshafen 1 (DE)**

(72) Erfinder: **CHRISTIAN, Klaus
St. Michaelsweg 2
D-7997 Immenstaad (DE)**
Erfinder: **FÜHRER, Gerd
Porscheweg 5
D-7990 Friedrichshafen (DE)**

(74) Vertreter: **Raue, Reimund
Zahnradfabrik Friedrichshafen AG Löwentaler
Strasse 100 Postfach 2520
D-7990 Friedrichshafen 1 (DE)**

Courier Press, Leamington Spa, England.

**Beschreibung**

Die Erfindung betrifft eine Klauenschaltkupplung nach dem Oberbegriff von Patentanspruch 1.

Aus der gattungsbildenden DE—B—12 84 309 sind zwei radial übereinander angeordnete Synchronringe einer Gangschalt- und Synchronisierkupplung bekannt, die über eine Verzahnung, die zwischen den Reibflächen angeordnet ist, miteinander verbunden sind. Der radial innere Ring hat noch halbkreisförmige Nasen, die in entsprechend geformte Ausnehmungen des Synchronkörpers mit Spiel eingreifen.

Klauenschaltkupplungen dieser Gattung haben viele, oft gegensätzlich wirkende Aufgaben zu erfüllen.

So soll z.B. der Gleichlauf der mit unterschiedlicher Drehzahl laufenden Kupplungsteile (Zahnrad und Synchronkörper) schnell und mit geringen Schaltkräften erreicht werden. Nach Gleichlauf soll aber auch leichtgängig entsperrt und schnell formschlüssig gekoppelt werden können, damit insgesamt ein schneller und in der Funktion geschmeidiger Verlauf der Schaltung erzielt wird.

Dabei sollen alle diese Aufgaben mit in der Funktion einfachen und in der Herstellung billigen Mitteln erfüllt werden.

Ein Weg, diesen Zielen näher zu kommen, ist unter anderem die Anzahl der Reibflächen zu erhöhen, um mit geringeren Schaltkräften höhere Reibmomente zu erzielen.

Aus der WO—A—85/01 998 ist eine Einrichtung bekannt, wobei noch die dem Zahnrad zugeordneten Reibflächen der kraftschlüssigen Kupplung nur in der Wirkstellung mit dem Zahnrad verbunden sind. Auch die in radialer Richtung übereinander angeordneten Synchronringe sind nur mit dem Synchronkörper mit Umfangsspiel und zur Mitnahme verbunden.

Die DE—A—14 50 825 zeigt noch, daß die Synchronringe über Zahnkupplungen miteinander verbunden sind.

Solche Einrichtungen führen infolge der erheblichen Vergrößerung der Reibflächen, verglichen mit einer einfachen Reibpaarung, zu einem schnelleren Gleichlauf bei angemessenen Schaltkräften, ohne daß die Reihflächen überlastet werden. Die Entsperrung hingegen ist infolge der relativ stumpfen Sperrflächen, die mit Rücksicht auf eine sichere Sperrwirkung nötig sind, nicht befriedigend, und der Herstellaufwand für eine solche Einrichtung ist zu hoch.

Es ist deshalb Aufgabe der Erfindung eine Klauenschaltkupplung nach dem Oberbegriff von Anspruch 1 in bezug auf einen geschmeidigeren Verlauf der gesamten Schaltung, also einschließlich der Entsperrung mit relativ einfachen und in der Herstellung billigen Mitteln weiterzuentwikkeln.

Diese Aufgabe wird mit den Merkmalen des kennzeichnenden Teils von Patentanspruch 1 erfüllt.

Durch die Anordnung eines Koppelgliedes zur unmittelbaren Verbindung der beiden Reibringe wirken die Reibmomente aller Reibpaarungen auf die Sperrfläche, so daß z. B. die Schaltzähne an der Schaltmuffe am Synchronring und am Zahnrad stärker angespitzt werden können, was zu einer günstigeren Entsperrung führt. Infolge des hohen Pantschmomentes ist die Kaltschaltgrenze bei relativ stumpfen Winkeln sehr hoch. Sie kann z. B. von 15°C bei einem Winkel an den Sperrzähnen von ungefähr 110° durch die schlankere Gestaltung dieses Winkels erheblich z. B. auf 5°C gesenkt werden.

Die Verbindung der ohnehin nötigen Mitnahmeeinrichtung zwischen Synchronkörper und den Synchronringen und die Koppelung der Synchronringe untereinander sowie die Verlagerung in den Bereich des Synchronkörpers vereinfacht den Aufbau und verbilligt die Herstellung. Darüber hinaus verringert sich die axiale Erstreckung der Klauenschaltkupplung.

Auch die einzelnen Bauteile selbst, insbesondere die Synchronringe, werden durch den Wegfall der Kuppelverzahnung für die Kupplung untereinander stark vereinfacht.

Mit den Ansprüchen 2 bis 4 wird die Erfindung in vorteilhafter Weise ausgestaltet.

Durch die günstige und einfache Gestaltung des Koppelgliedes ist eine entsprechend einfache Herstellung in einem Arbeitsverfahren durch z. B. Stanzen, Gießen oder Sintern möglich. Besondere Vorteile ergeben sich bei den Doppelschaltkupplungen, weil die Koppelglieder für beide Schaltkupplungen genutzt werden können, ohne daß ein erheblich größerer Aufwand nötig ist.

Weitere Einzelheiten der Erfindung werden anhand von Ausführungsbeispielen und Zeichnungen erläutert.

Es zeigen:

Fig. 1 eine Doppelklauenschaltkupplung mit Sperrsynchronisiereinrichtung im Schnitt und im Bereich des Druckbolzens,

Fig. 2 einen Teilschnitt nach Fig. 1, jedoch im Bereich des Koppelgliedes,

Fig. 3 einen Teilschnitt III—III nach Fig. 2,

Fig. 4 einen Ausschnitt IV—IV nach Fig. 2 im Bereich des Koppelgliedes,

Fig. 5 einen Ausschnitt V—V nach Fig. 1 im Bereich des Druckbolzens,

Fig. 6 einen Schnitt durch eine teilweise dargestellte Abwicklung im Bereich der Sperrzähne VI—VI nach Fig. 1.

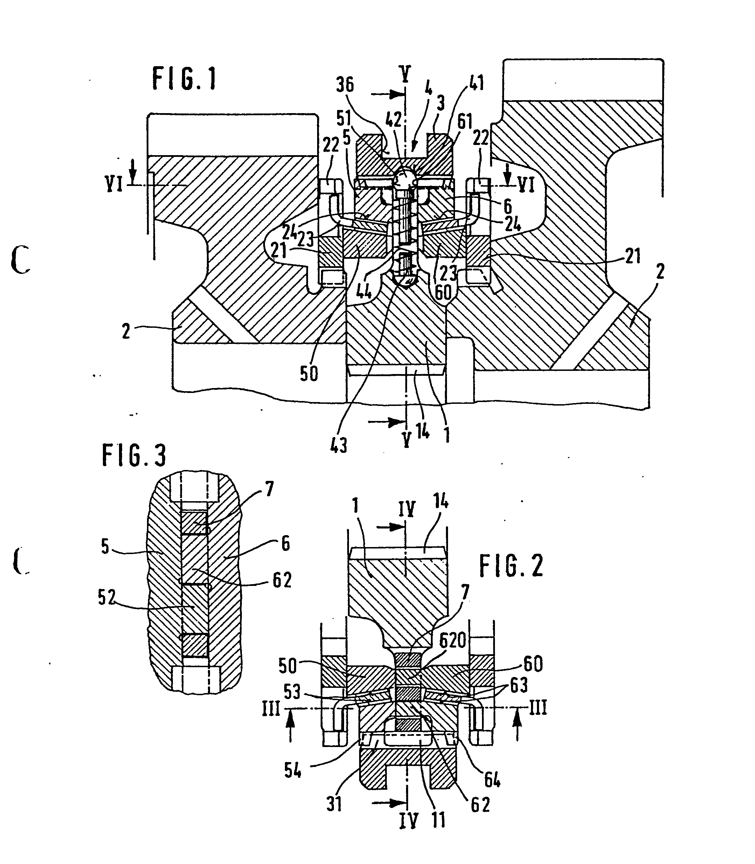

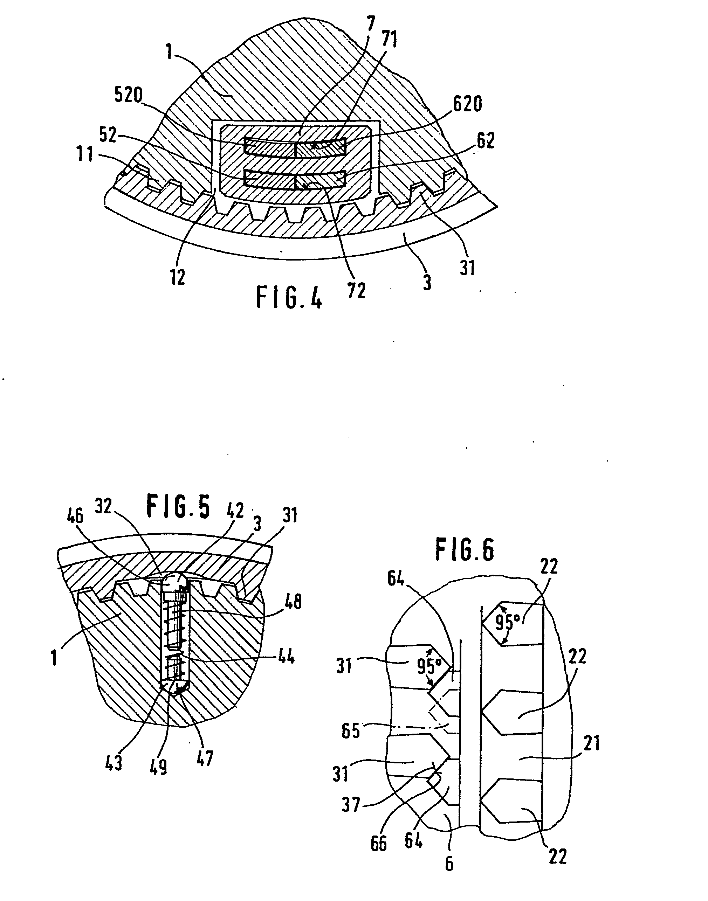

In dem Schnitt durch die Doppelklauenschaltkupplung nach der Fig. 1 im Bereich des Druckbolzens 4 und nach Fig. 2 im Bereich des Koppelgliedes 7 ist der Synchronkörper 1 über eine Verzahnung 14 mit einer nicht dargestellten Welle verbunden auf der auch die Zahnräder 2 gelagert sind. Mit diesen Zahnrädern fest verbunden ist der jeweilige Kupplungskörper 21 mit der Kuppelverzahnung 22. Die Schiebemuffe 3 ist mit dem Synchronkörper 1 über eine Verzahnung 11, 31 drehfest verbunden und z. B. ein geteilter Druckbolzen 42, 43 ist im Synchronkörper 1 gelagert und stützt sich in einer Ausnehmung 32 (Fig. 5) der Schiebemuffe 3 ab. Zwischen dem Druckbolzenober- 42 und -unterteil 43 ist noch eine Druckfeder 44 angeordnet.

In axialer Erstreckung zwischen Synchronkörper 1 und dem Kupplungskörper 21 sind noch die Synchronringe 5, 50; 6, 60 mit dem dazwischenliegenden Reibring 23, der dem Kupplungskörper 21 zugeordnet und mit diesem z. B. drehfest verbunden ist, angeordnet. Die radial außenliegenden Synchronringe 5, 6 tragen noch die Sperrverzahnung 54, 64 und beide Synchronringe 5, 50; 6, 60 und bei einer Doppelschaltkupplung je zwei der Synchronringe sind über Mitnehmer 62, 620 in eine Aussparung 71, 72 des Koppelgliedes 7 eingespannt, wie es ergänzend zu Fig. 2 aus Fig. 3 erkennbar ist. Die Fig. 4 zeigt das Koppelglied 7 mit den eingespannten Mitnehmern 52, 520; 62, 620 der Synchronringe 5, 50; 6, 60, wobei das Koppelglied in einer Aussparung 12 des Synchronkörpers 1 mit Umfangsspiel gelagert ist. Zweckmäßigerweise sind drei solcher Aussparungen am Umfang verteilt. Auch die geteilten Druckbolzen 42, 43 sind aus Gründen der besseren Funktion dreifach am Umfang verteilt angeordnet, und wie Fig. 5 zeigt, zwischen Synchronkörper 1 und einer Ausnehmung 32 der Schiebemuffe 3 eingespannt, wobei das Druckbolzenober- 42 und -unterteil 43 jeweils aus einem Kugelkopf 46, 47 und aus einem Schaft 48, 49 für die Aufnahme der Druckfeder 44 bestehen.

Die Fig. 6 zeigt die an den jeweiligen Stirnseiten angespitzten Kuppelzähne der Innenverzahnung 31, der Schiebemuffe 3, der Sperrzähne 64 vom Synchronring 6 und der Kuppelzähne 22 vom Kupplungskörper 21.

Die Klauenschaltkupplung mit Sperrsynchronisiereinrichtung wirkt wie folgt:

Bei der Einleitung einer Schaltung wird über den Gleitstein einer Schaltgabel (nicht gezeichnet), der in der Rille 36 der Schiebemuffe läuft, diese z. B. nach rechts bewegt. Über die Druckfläche 41 am Kugelkopf 46 des Druckbolzens 4 wird dabei durch axialen Druck auf die Druckflächen 51, 61 des Synchronringes 5, 6 ansynchronisiert, so daß bei Drehzahlunterschied zwischen Synchronkörper 1 und Zahnrad 2 die Synchronringe und damit das Koppelglied 7 (Fig. 4) in Umfangsrichtung ausgelenkt werden. Das Koppelglied 7 kommt an einer Begrenzung der Aussparung 12 zur Anlage und die Sperrzähne 64 des Synchronringes 6 drehen in die gezeichnete Sperrstellung (Fig. 6). Die Innenverzahnung 31 der Schiebemuffe 3 verhindert mit der Anlage der Sperrflächen 37, 66 von beiden Verzahnungen das weitere Verschieben der Schiebemuffe 3. Infolge der Einspannung beider Synchronringe 6, 60 im Koppelglied 7 wirken alle Reibpaarungen—Reibflächen 24, 53, 63—also die beider Synchronringe 5, 50; 6, 60 mit dem Reibring 23 und erbringen ein hohes Sperrmoment, so daß der Winkel der stirnseitigen Anschrägungen an den Kuppelzähnen 31, 21 und Sperrzähnen 64 relativ schlank z. B. bei 90°—95° gehalten werden kann und trotzdem sicher gesperrt ist.

Erst bei Gleichlauf geht das aus der Differenzdrehzahl resultierende Sperrmoment auf 0, und der noch anliegende Schaltdruck auf die Schiebemuffe 3 kann das noch aus der Massenträgheit und dem Panschen verbleibende Sperrmoment überwinden und die Sperrzähne werden von der Stellung 64 in die Stellung 65 verschoben. Damit ist die Sperrwirkung aufgehoben und die Innenverzahnung 31 der Schiebemuffe 3 kann in die Kuppelverzahnung 22 am Kupplungskörper 21 eingreifen. Zwischen Synchronkörper und Zahnrad ist nunmehr eine formschlüssige Kupplung hergestellt.

Diese Erfindung ist nicht auf das dargestellte Ausführungsbeispiel beschränkt. So ist es z. B. auch möglich, die Sperrzähne an den Synchronring nicht vorzusehen, sondern Sperrflächen an der Schiebemuffe anzuordnen, die in Verbindung mit einem Sperrbolzen wirken und bei Nichtsynchronismus die formschlüssige Koppelung vom Synchronkörper mit dem Zahnrad verhindern. Auch diese Sperrflächen können mit einem schlankeren Winkel angeordnet werden.

### Bezugszeichen

| | |
|---|---|
| 1 | Synchronkörper |
| 11 | Außenverzahnung |
| 12 | Aussparung |
| 14 | Innenverzahnung |
| 2 | Zahnrad |
| 21 | Kupplungskörper |
| 22 | Kupplungszahn |
| 23 | Reibring |
| 24 | Reibflächen |
| 3 | Schiebemuffe |
| 31 | Innenverzahnung |
| 32 | Ausnehmung |
| 36 | Rille |
| 37 | Sperrfläche |
| 4 | Sperr-/Druckbolzen |
| 41 | Druckfläche |
| 42 | Druckbolzenoberteil |
| 43 | Druckbolzenunterteil |
| 44 | Druckfeder |
| 46 | Kugelkopf |
| 47 | Kugelkopf |
| 48 | Schaft |
| 49 | Schaft |
| 5, 50 | Synchronring |
| 51 | Druckfläche |
| 52, 520 | Mitnehmer |
| 53 | Reibfläche |
| 54 | Sperrzähne |
| 6, 60 | Synchronring |
| 61 | Druckfläche |
| 62, 620 | Mitnehmer |
| 63 | Reibfläche |
| 64 | Sperrzähne in Sperrstellung |
| 65 | Sperrzähne in entsperrter Stellung |
| 66 | Sperrfläche |
| 7 | Koppelglied |
| 71 | Aussparung |
| 72 | Aussparung |

**Patentansprüche**

1. Klauenschaltkupplung mit Sperrsynchronisiereinrichtung für Getriebeschaltungen, bei welcher ein Synchronkörper (1) und ein mit unterschiedlicher Drehzahl rotierendes Zahnrad (2) mit Hilfe einer axial verschiebbaren, ringförmigen Schiebemuffe (3) bei Gleichlauf formschlüssig zusammengekoppelt werden, wobei eine Innenverzahnung (31) der Schiebemuffe (3) in je eine entsprechende Außenverzahnung (11, 22) des Synchronkörpers (1) und des Zahnrades (2) eingreift, mit zwischen Synchronkörper (1) und Schiebemuffe (3) angeordneten federbelasteten Sperrelementen, die im nicht gekoppelten Zustand in eine Ausnehmung (32) an der Innenseite der Schiebemuffe (3) eingreifen und axial bewegbare Druckflächen (41) aufweisen, die mit Druckflächen (51, 61) an einem zwischen Synchronkörper (1) und dem Zahnrad (2) angeordneten Synchronring (5, 6) in Wirkverbindung stehen, wobei mindestens zwei radial übereinander angeordnete Synchronringe (5, 50; 6, 60) über Mitnahmeeinrichtungen (52, 520; 62, 620) miteinander verbunden sind und mit dem Synchronkörper (1) in beiden Umfangsrichtungen mit Umfangsspiel in Mitnahmeverbindung stehen, und wobei Reibflächen (24), die dem Zahnrad (2) zugeordnet sind, mit Reibflächen (53, 63) von den Synchronringen gemeinsam mehrere kraftschlüssige Kupplungen bilden, und daß bei Nichtsynchronismus über Sperrflächen (37, 66) die axiale Bewegung der Schiebemuffe (3) blockiert wird, dadurch gekennzeichnet, daß die federbelasteten Sperrelemente Druckbolzen (4) sind und daß in einer Aussparung (12) im Synchronkörper (1) ein selbständiges Bauteil als Koppelglied (7) mit Umfangsspiel angeordnet ist, in das die mindestens zwei in radialer Richtung übereinander angeordneten Synchronringe (5, 50; 6, 60) eingreifen, wodurch sie miteinander verbunden sind.

2. Klauenschaltkupplung nach Anspruch 1, dadurch gekennzeichnet, daß das Koppelglied (7) gestanzt, gesintert oder fertig gegossen ist und Aussparungen (71, 72) hat, in die Mitnehmer (52, 520; 62, 620) der Synchronringe (5, 50; 6, 60), die axial zum Synchronkörper hin vorstehen, eingreifen.

3. Klauenschaltkupplung nach Anspruch 2, jedoch in der Ausführung mit zwei in axialer Richtung nebeneinander angeordneten Klauenschaltkupplungen (Doppelschaltkopplung), dadurch gekennzeichnet, daß das Koppelglied (7) die Synchronringe (5, 6, 50, 60) beider Sperrsynchronisiereinrichtungen verbindet.

4. Klauenschaltkupplung nach Anspruch 3, dadurch gekennzeichnet, daß in der radial außen angeordneten Aussparung (72) des Koppelgliedes (7) die äußeren (5, 6) und in der radial inneren Aussparung (71) die inneren Synchronringe (50, 60) miteinander verbunden sind.

**Revendications**

1. Embrayage à crabots avec dispositif de synchronisation à verrouillage pour boîtes de vitesses, comportant un synchroniseur (1) et une roue dentée (2) à vitesse de rotation variable qui sont, en synchronisme, accouplés à l'aide d'un baladeur annulaire (3) mobile dans le sens axial, embrayage dans lequel

la denture intérieure (31) du baladeur (3) engrène avec les dentures extérieures correspondantes (11, 22) du synchroniseur (1) et de la roue dentée (2),

des organes de verrouillage, disposés entre le synchroniseur (1) et le baladeur (3) et présentant des surfaces de pression (41) mobiles dans le sens axial agissant avec les surfaces de pression (51, 61) d'une bogue de synchronisation (5, 6) intercalée entre le synchroniseur (1) et la roue dentée (2), s'encliquettent à l'état désaccouplé dans un évidement (32) sur le côté intérieur du baladeur (3),

au moins deux bagues de synchronisation (5, 50; 6, 60) superposées dans le sens radial sont reliées entre elles par le biais d'entraîneurs (52, 520; 62, 620) et sont entraînées dans les deux sens périphériques avec un jeu circonférentiel par le synchroniseur (1),

les aires de friction (24) de la roue dentée (2) forment avec les aires de friction (53, 63) des bagues de synchronisation plusieurs accouplements par adhérence

en cas de non-synchronisme, le déplacement axial du baladeur (3) est rendu impossible par les surfaces de blocage (37, 66),

caractérisé en ce que les organes de verrouillage poussés par ressort sont constitués de tiges poussoirs (4) et que le synchroniseur (1) comporte dans un évidement (12) en tant qu'organe d'accouplement (7), un élément indépendant avec jeu circonférentiel, dans lequel viennent s'emboîter, de manière à assurer leur liaison, les (minimum) deux bagues de synchronisation (5, 50; 6, 60) superposées.

2. Embrayage à crabots selon la revendication 1, caractérisé par le fait que l'organe d'accouplement (7) est formé à la presse, fritté ou coulé à la cire perdue et possède des évidements (71, 72) dans lesquels viennent s'emboîter les entraîneurs (52, 520; 62, 620) des bagues de synchronisation (5, 50; 6, 60) dépassant dans le sens axial en direction du synchroniseur.

3. Embrayage à crabots selon la revendication 2, toutefois avec deux embrayages à crabots disposés côte à côte dans le sens axial (embrayage double), caractérisé par le fait que l'organe d'accouplement (7) relie les bagues de synchronisation (5, 6, 50, 60) des deux dispositifs de synchronisation à verrouillage.

4. Embrayage à crabots selon la revendication 3, caractérisé par le fait que les bagues de synchronisation extérieures (5, 6) sont reliées entre elles dans l'évidement radial extérieur (72) et les bagues de synchronisation intérieures (50, 60) dans l'évidement radial intérieur (71).

**Claims**

1. A claw clutch comprising a locking synchronizing device for gear changing, in which in the synchronized state a synchromesh element (1) and a gear (2) rotating at different speeds are coupled in a form-locking manner with the aid of an axially displaceable annular sliding sleeve (3), an inner toothing (31) of the sliding sleeve (3) engaging in a corresponding outer toothing (11, 22) of the synchromesh element (1) and of the gear (2) respectively, comprising spring-loaded locking elements which are arranged between the synchromesh element (1) and the sliding sleeve (3), engage in a recess (32) on the inside of the sliding sleeve (3) in the uncoupled state and comprise axially displaceable pressure surfaces (41), which are operationally connected with pressure surfaces (51, 61) on a synchromesh ring (5, 6) arranged between the synchromesh element (1) and the gear (2), at least two radially superimposed synchromesh rings (5, 50; 6, 60) being connected with one another via carrier devices (52, 520; 62, 620) and being connected with circumferential clearance in both circumferential directions with the synchromesh element (1) so as to move together with the latter, and friction surfaces (24) associated with the gear (2) forming a plurality of frictional couplings with the friction surfaces (53, 63) of the synchromesh rings, and in the non-synchronized state the axial movement of the sliding sleeve (3) is blocked by means of locking surfaces (37, 66), characterised in that the spring-loaded locking elements are pressure bolts (4) and an independent structural part is arranged with circumferential clearance in a recess (12) in the synchromesh element (1) as a coupling member (7), in which the synchromesh rings (5, 50; 6, 60)—of which there are at least two superimposed in the radial direction—engage, thereby becoming connected with one another.

2. A claw clutch according to claim 1, characterised in that the coupling member (7) is punched, sintering or finish-cast and comprises recesses (71, 72) in which carriers (52, 520; 62, 620) of the synchromesh rings (5, 50; 6, 60), which project axially in the direction of the synchromesh element, engage.

3. A claw clutch according to claim 2, but in the embodiment comprising two claw clutches (double clutch) arranged adjacent one another in the axial direction, characterised in that the coupling member (7) connects the synchromesh rings (5, 6, 50, 60) of both locking synchronizing devices.

4. A claw clutch according to claim 3, characterized in that the outer synchromesh rings (5, 6) are connected with one another in the radially outer recess (72) of the coupling member (7) and the inner synchromesh rings (50, 60) in the radially inner recess (71).

FIG.1

FIG.3

FIG.2

EP 0 277 115 B1

FIG.4

FIG.5

FIG.6

2